# EUROPEAN PATENT APPLICATION

(11) **EP 4 502 619 A1**
(43) Date of publication of application: **05.02.2025**
(21) Application number: 23778831.0
(22) Date of filing: 01.02.2023
(51) Int. Cl.: G01N 35/10

(54) **AUTOMATIC ANALYSIS DEVICE**

(30) Priority: 28.03.2022 JP 2022051586
(71) Applicant: HITACHI HIGH-TECH CORPORATION, Tokyo 105-6409 (JP)
(72) Inventor: UENO Saki, Tokyo 105-6409 (JP); YASUI Akihiro, Tokyo 105-6409 (JP)
(74) Representative: MERH-IP Matias Erny Reichl Hoffmann Patentanwälte PartG mbB
(86) International application number: PCT/JP2023/003293
(87) International publication number: WO 2023/188795

(57) **Abstract**

The purpose of the present invention is to provide an automatic analysis device by which it is possible to shorten analysis time while guaranteeing use of various reagents. This automatic analysis device comprises: a first reagent dispensing mechanism of a pipetting type that, upon aspirating a reagent, moves to a prescribed location away from the reagent and then discharges the reagent; and a second reagent dispensing mechanism of a dispensing type that supplies a reagent via a flow path connecting an aspirating port to a discharge port for the reagent. The second reagent dispensing mechanism comprises a temperature adjustment mechanism that adjusts the temperature of the reagent.

## Description

### Technical Field

The present invention relates to an automatic analysis device.

### Background Art

In an automatic analysis device for automatically analyzing components of a sample (specimen) such as blood, a sample and a reagent are dispensed and mixed, and the obtained mixed liquid is used for measurement. Here, a pipetting type is generally known as a reagent dispensing method. As described in PTL 1, for example, a dispensing mechanism of a pipetting type aspirates a reagent from a reagent container, then rises, rotates horizontally, and then descends to discharge the reagent into a reaction container.

### Citation List

### Patent Literature

PTL 1: JP2011-99681A

### Summary of Invention

### Technical Problem

The reagent dispensing mechanism of the pipetting type is suitable for dispensing various reagents, but is not suitable for adjusting a temperature of a reagent. When a temperature of a reagent is adjusted in an automatic analysis device adopting a dispensing mechanism of a pipetting type, as described in PTL 1, it is necessary to incorporate a heater in the dispensing mechanism itself or to temporarily dispense the reagent into another reaction container or the like to raise the temperature for a certain period of time. In the reagent dispensing mechanism of the pipetting type, an amount of reagent that can be dispensed at one time is limited. Therefore, in the reagent dispensing mechanism of the pipetting type, preparations before analysis such as adjusting the temperature of the reagent and dispensing an appropriate amount of reagent tend to take time, and as a result, an analysis time may become long.

The purpose of the invention is to provide an automatic analysis device by which it is possible to shorten analysis time while guaranteeing use of various reagents.

### Solution to Problem

In order to solve the above problems, this automatic analysis device according to the invention includes: a first reagent dispensing mechanism of a pipetting type that, upon aspirating a reagent, moves to a prescribed location away from the reagent and then discharges the reagent; and a second reagent dispensing mechanism of a dispensing type that supplies a reagent via a flow path connecting an aspirating port to a discharge port for the reagent. The second reagent dispensing mechanism includes a temperature adjustment mechanism that adjusts a temperature of the reagent.

### Advantageous Effects of Invention

According to the invention, it is possible to provide an automatic analysis device by which it is possible to shorten analysis time while guaranteeing use of various reagents.

### Brief Description of Drawings

[FIG. 1] FIG. 1 is a plan view showing a schematic configuration of an automatic analysis device according to Embodiment 1.
[FIG. 2A] FIG. 2A is a flowchart showing a first reagent discharge operation.
[FIG. 2B] FIG. 2B is a timing chart showing an operation timing of each mechanism in the first reagent discharge operation.
[FIG. 3A] FIG. 3A is a flowchart showing a second reagent discharge operation.
[FIG. 3B] FIG. 3B is a timing chart showing an operation timing of each mechanism in the second reagent discharge operation.
[FIG. 4A] FIG. 4A is a flowchart showing a third reagent discharge operation.
[FIG. 4B] FIG. 4B is a timing chart showing an operation timing of each mechanism in the third reagent discharge operation.
[FIG. 5] FIG. 5 is a side view showing a position relationship of reagent dispensing mechanisms.
[FIG. 6] FIG. 6 is a side view showing another position relationship of the reagent dispensing mechanisms.
[FIG. 7] FIG. 7 is a side view showing still another position relationship of the reagent dispensing mechanisms.
[FIG. 8] FIG. 8 is a plan view showing a schematic configuration of an automatic analysis device according to a modification of Embodiment 1.
[FIG. 9] FIG. 9 is a plan view showing a schematic configuration of an automatic analysis device according to Embodiment 2.
[FIG. 10] FIG. 10 is a plan view showing a schematic configuration of an automatic analysis device according to a modification of Embodiment 2.
[FIG. 11] FIG. 11 is a plan view showing a schematic configuration of an automatic analysis device according to Embodiment 3.

### Description of Embodiments

An embodiment of an automatic analysis device according to the invention will be described with reference to Embodiment 1 to Embodiment 3.

### Embodiment 1

### (Device Configuration)

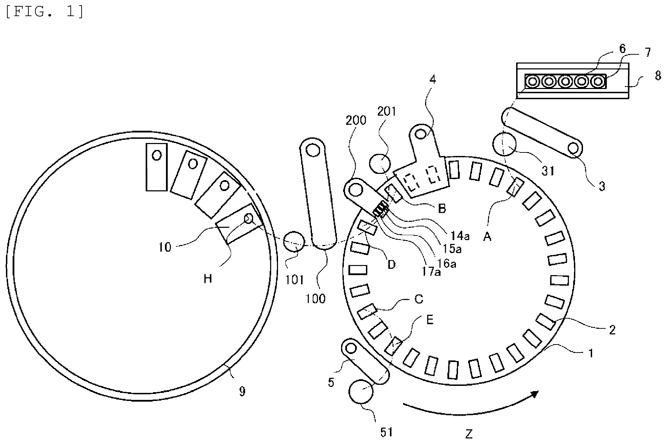

FIG. 1 is a plan view showing a schematic configuration of an automatic analysis device according to Embodiment 1. As shown in FIG. 1, the automatic analysis device according to the present embodiment mainly includes a reaction disc 1, a sample conveyance mechanism 8, a sample dispensing mechanism 3, a reagent disc 9 including a reaction container 2, a first reagent dispensing mechanism 100, a second reagent dispensing mechanism 200, and a stirring mechanism 5. Although not shown in FIG. 1, the automatic analysis device according to the present embodiment includes a measurement unit that measures transmitted light and scattered light of a mixed liquid of a sample and a reagent, and a control unit that controls each mechanism. In the present embodiment, an example in which the measurement unit measures transmitted light or scattered light will be described. However, the measurement unit may measure potential, electrical resistance, chemiluminescence, fluorescence, and the like, and is not limited to a measurement method. The measurement unit is not limited to measurement of the mixed liquid contained in the reaction container 2, and the measurement unit may measure the mixed liquid after moving the mixed liquid from the reaction container 2 to the measurement unit using a nozzle, a flow path, or the like for solution transportation.

The reaction disc 1 includes a plurality of reaction containers 2 for reacting a sample and a reagent, in a state of being separated from each other at predetermined intervals along a circumferential direction thereof (circumferentially), and rotates in a direction indicated by an arrow Z in FIG. 1. The sample conveyance mechanism 8 is provided near the reaction disc 1 and conveys a rack 7 on which a sample container 6 is placed. The sample dispensing mechanism aspirates the sample contained in the sample container 6 and discharges the sample to the reaction container 2, and is capable of vertical movement and horizontal rotation. The reagent disc 9 is a storage on which a plurality of reagent containers 10 containing reagents are placed in a circumferential shape, and is kept cool as necessary.

The first reagent dispensing mechanism 100 is a mechanism for dispensing the reagent by pipetting type. When the first reagent dispensing mechanism 100 aspirates the reagent (first reagent) contained in the reagent container 10 on the reagent disc 9, the first reagent dispensing mechanism 100 rises to separate from the reagent, rotates to a reagent discharge position on the reaction disc 1, and then descends to discharge the reagent to the reaction container 2. When the reagent container 10 to be aspirated is changed and a type of the dispensed first reagent changes, the first reagent dispensing mechanism 100 is washed by the first reagent dispensing mechanism washing mechanism 101.

On the other hand, the second reagent dispensing mechanism 200 is a mechanism for dispensing the reagent by a dispensing type, and supplies the reagent (second reagent) through a flow path connected from an aspirating port to a discharge port for the reagent. The discharge port of the second reagent dispensing mechanism 200 includes a plurality of reagent discharge nozzles 14a to 17a, each of which discharges the second reagent to the reaction container 2 at the reagent discharge position. Although not shown in FIG. 1, each of the nozzles is connected via separate reagent transport tubes to an aspirating port of the reagent container loaded in a common reagent loading position, and the second reagent can be sent by an operation of a syringe, a diaphragm pump, or the like. The second reagent dispensing mechanism 200 may have one reagent discharge nozzle.

The second reagent dispensing mechanism 200 according to the present embodiment includes a temperature adjustment mechanism (not shown) for adjusting a temperature of the second reagent. The temperature of the second reagent in the second reagent dispensing mechanism 200 is adjusted in at least one of the reagent discharge nozzles 14a to 17a, a syringe, a reagent transport tube, and other reagent storing units, so that the second reagent is adjusted (heated) in advance to a temperature suitable for analysis before being discharged to the reaction container 2. Therefore, a time required to adjust the temperature of the reagent can be reduced, and as a result, an overall analysis time can be shortened. When the reaction disc 1 has a temperature adjustment mechanism such as a thermostatic bath, the temperature of the reagent in the reaction container 2 after dispensing may also be adjusted. In particular, when an amount of dispensing is large, it is effective to use the temperature adjustment mechanism of the second reagent dispensing mechanism 200 and the temperature adjustment mechanism of the reaction disc 1 in combination.

In the automatic analysis device according to the present embodiment shown in FIG. 1, the first reagent dispensing mechanism 100 and the second reagent dispensing mechanism 200 can discharge the reagent to the reaction container 2 at a first reagent discharge position B and a second reagent discharge position D. Therefore, only one dispensing mechanism may discharge the reagent at the first reagent discharge position B, and the other dispensing mechanism may discharge the reagent at the second reagent discharge position D. In the following, an example will be described in which the first reagent dispensing mechanism 100 discharges the first reagent and the second reagent dispensing mechanism 200 discharges the second reagent at the first reagent discharge position B.

The stirring mechanism 5 stirs the sample and the reagent dispensed into the reaction container 2, and is washed by a stirring mechanism washing mechanism 51. The stirring mechanism 5 is not limited to a contact type using a stirring rod or the like, but may be a non-contact type (ultrasonic wave or the like) that does not require washing. In addition to the above-described mechanisms, the automatic analysis device includes a sample dispensing mechanism washing mechanism 31 that washes the sample dispensing mechanism 3, a second reagent dispensing mechanism washing mechanism 201 that washes the second reagent dispensing mechanism 200, and a reaction container washing mechanism 4 that washes the reaction container 2. In the reaction container washing mechanism 4, the mixed liquid is discharged from the reaction container 2 for which measurement is ended, and washing water is supplied to wash the reaction container 2.

### (Analysis Operation)

An analysis operation of the automatic analysis device will be described.

First, the sample dispensing mechanism 3 aspirates the sample from the sample container 6 on the rack 7 conveyed by the sample conveyance mechanism 8, and discharges the sample to the reaction container 2 at a sample discharge position A. After the sample is dispensed, the sample dispensing mechanism 3 is washed by the sample dispensing mechanism washing mechanism 31.

Next, the reaction disc 1 rotates, and when the reaction container 2 into which the sample is dispensed is at the first reagent discharge position B, the reaction disc 1 stops. At this time, the first reagent dispensing mechanism 100 aspirates the first reagent from the reagent container 10 at a reagent aspirating position H, and discharges the first reagent to the reaction container 2 at the first reagent discharge position B. On the other hand, the second reagent dispensing mechanism 200 discharges the second reagent from any one of the reagent discharge nozzles 14a to 17a into the common reaction container 2 at the first reagent discharge position B.

Thereafter, the reaction disc 1 rotates, and when the reaction container 2 into which the sample and the reagent are dispensed is at a first stirring position C, the reaction disc 1 stops. At this time, the stirring mechanism 5 stirs the sample and the reagent in the reaction container 2. When the sample and the reagent are sufficiently mixed in a process of discharging the reagent from the first reagent dispensing mechanism 100 and the second reagent dispensing mechanism 200, stirring by the stirring mechanism 5 can be omitted.

Further, if necessary, the reaction disc 1 stops when the reaction container 2 is at the second reagent discharge position D, and the first reagent dispensing mechanism 100 and/or the second reagent dispensing mechanism 200 dispenses the reagent to the reaction container 2. When the reagent is dispensed into the reaction container 2 at the second reagent discharge position D, when the reaction container 2 is at a second stirring position E, the stirring mechanism 5 stirs the sample and the reagent in the reaction container 2.

When the stirring of the sample and the reagent in the reaction container 2 is ended, the reaction disc 1 rotates and the reaction container 2 moves to a measurement position. The measurement unit measures transmitted light and scattered light emitted from a light source to the reaction container 2, and transmits a result to the control unit. After the measurement is ended, the reaction container 2 is washed by the reaction container washing mechanism 4 and conveyed to a disposal unit.

### (Reagent Discharge Operation)

Here, among the operations described above, in particular, the operation when the first reagent dispensing mechanism 100 and the second reagent dispensing mechanism 200 dispense the reagent to the stopped common reaction container 2 will be described, and three methods will be specifically described. In any of reagent discharge methods described below, it is assumed that an amount of the second reagent that is discharged by the second reagent dispensing mechanism 200 into the reaction container 2 is larger than an amount of the first reagent that is discharged by the first reagent dispensing mechanism 100 into the reaction container 2. Therefore, in any of the reagent discharge methods, discharging of the first reagent is ended before discharging of the second reagent.

### <First Reagent Discharge Method>

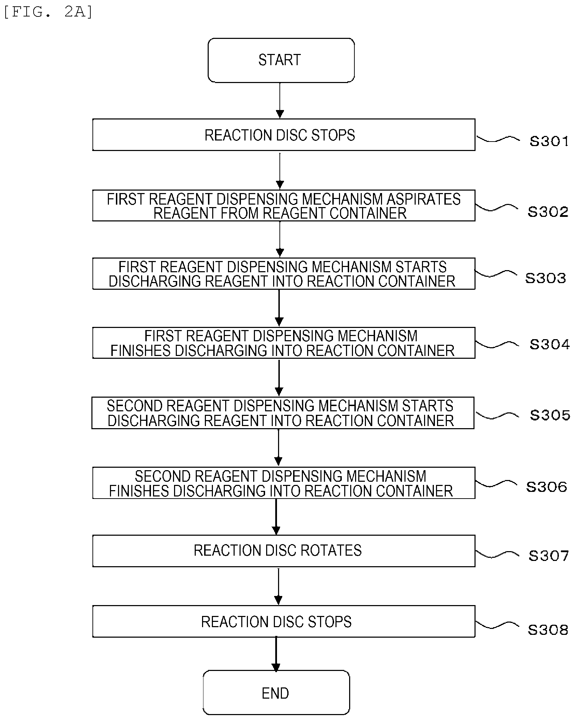

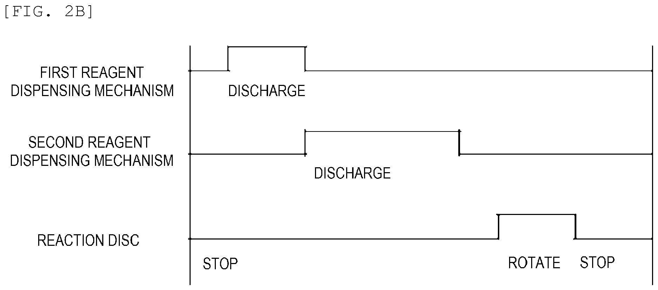

FIG. 2A is a flowchart showing a first reagent discharge operation. FIG. 2B is a timing chart showing an operation timing of each mechanism in the first reagent discharge operation. A first reagent discharge method is a method in which the second reagent dispensing mechanism 200 starts discharging the second reagent after the first reagent dispensing mechanism 100 finishes discharging the first reagent.

First, when the reaction container 2 is at a reagent discharge position, the reaction disc 1 stops (step S301), and the first reagent dispensing mechanism 100 aspirates the first reagent from the reagent container 10 (step S302). Subsequently, the first reagent dispensing mechanism 100 starts discharging the first reagent, which is aspirated, into the reaction container 2 (step S303).

When the first reagent dispensing mechanism 100 finishes discharging the reagent (step S304), the second reagent dispensing mechanism 200 starts discharging the second reagent into the reaction container 2 (step S305). When the second reagent dispensing mechanism 200 finishes discharging the reagent (step S306), the reaction disc 1 rotates (step S307), and when the reaction container 2 is at a measurement position or the like, the reaction disc 1 stops again (step S308).

As described above, the amount of the second reagent is larger than that of the first reagent, so that the first reagent and the second reagent are efficiently mixed by a liquid flow of a large amount of the second reagent that is discharged later. When a discharge amount of the second reagent is not so large or when a viscosity of the first reagent is extremely high, it is conceivable that the previously discharged first reagent accumulates on a bottom surface of the reaction container 2 and is difficult to flow. In such a case, the reaction container 2 is further stirred by the stirring mechanism 5 at a stirring position.

### <Second Reagent Discharge Operation>

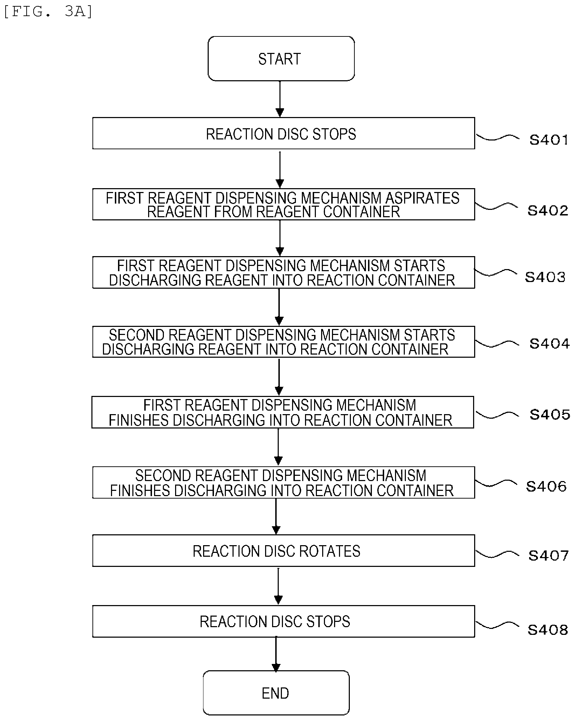

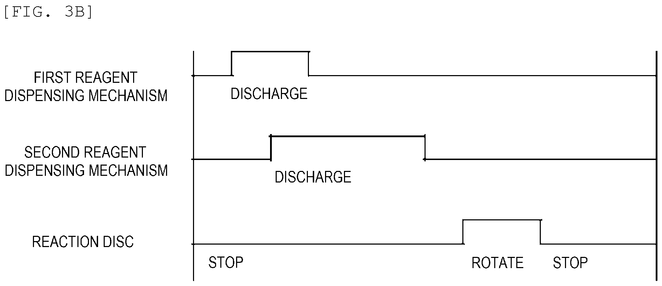

FIG. 3A is a flowchart showing a second reagent discharge operation. FIG. 3B is a timing chart showing an operation timing of each mechanism in the second reagent discharge operation. A second reagent discharge method is a method in which the second reagent dispensing mechanism 200 starts discharging the second reagent before the first reagent dispensing mechanism 100 finishes discharging the first reagent.

First, when the reaction container 2 is at a reagent discharge position, the reaction disc 1 stops (step S401), and the first reagent dispensing mechanism 100 aspirates the first reagent from the reagent container 10 (step S402). Subsequently, the first reagent dispensing mechanism 100 starts discharging the first reagent, which is aspirated, into the reaction container 2 (step S403). Up to this point, the method is the same as the first reagent discharge method.

In the second reagent discharge method, while the first reagent dispensing mechanism 100 is discharging the first reagent, the second reagent dispensing mechanism 200 starts discharging the second reagent (step S404). While the second reagent dispensing mechanism 200 is discharging the second reagent, the first reagent dispensing mechanism 100 finishes discharging the reagent first (step S405), and then the second reagent dispensing mechanism 200 finishes discharging the reagent (step S406). When each reagent dispensing mechanism finishes discharging the reagent, the reaction disc 1 rotates (step S407), and when the reaction container 2 is at a measurement position or the like, the reaction disc 1 stops again (step S408).

According to the second reagent discharge method, the second reagent is discharged before the previously discharged first reagent accumulates on the bottom surface of the reaction container 2, and thus a large amount of the second reagent involves a small amount of the first reagent, promoting mixing of the first reagent and the second reagent.

### <Third Reagent Discharge Operation>

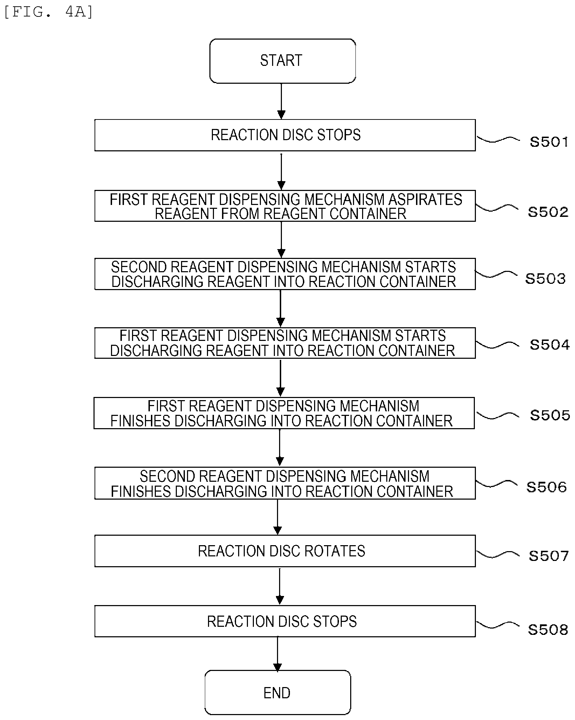

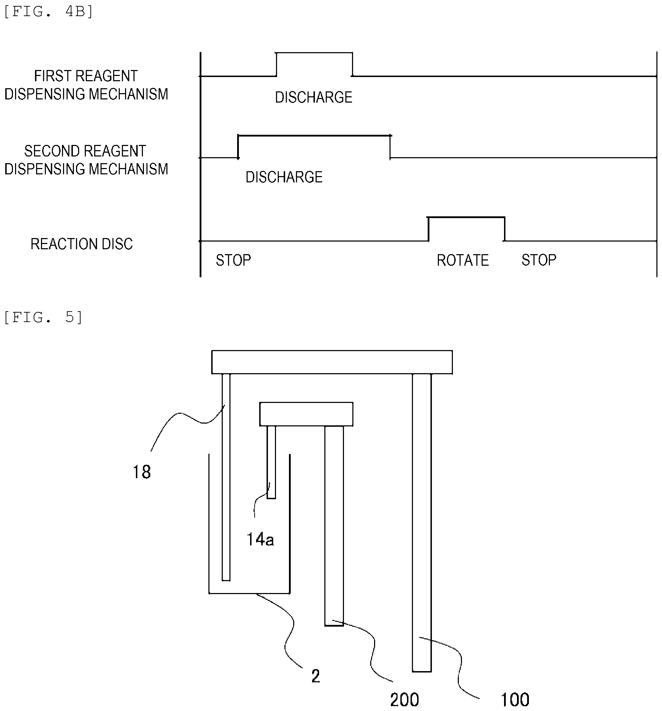

FIG. 4A is a flowchart showing a third reagent discharge operation. FIG. 4B is a timing chart showing an operation timing of each mechanism in the third reagent discharge operation. A third reagent discharge method is a method in which the first reagent dispensing mechanism 100 starts and finishes discharging the first reagent while the second reagent dispensing mechanism 200 is discharging the second reagent.

First, when the reaction container 2 is at a reagent discharge position, the reaction disc 1 stops (step S501), and the first reagent dispensing mechanism 100 aspirates the first reagent from the reagent container 10 (step S502).

Next, in the third reagent discharge method, the second reagent dispensing mechanism 200 starts discharging the second reagent before the first reagent dispensing mechanism 100 starts discharging the first reagent (step S503). Then, while the second reagent dispensing mechanism 200 is discharging the second reagent, the first reagent dispensing mechanism 100 starts discharging the first reagent (step S504). When a predetermined amount of the first reagent is discharged, the first reagent dispensing mechanism 100 finishes discharging the first reagent (step S505). Thereafter, the second reagent dispensing mechanism 200 finishes discharging the second reagent (step S506). When each reagent dispensing mechanism finishes discharging the reagent, the reaction disc 1 rotates (step S507), and when the reaction container 2 is at a measurement position or the like, the reaction disc 1 stops again (step S508).

An order of steps S502 and S503 described above may be reversed.

According to the third reagent discharge method, a small amount of the first reagent flows into a liquid flow of a large amount of the second reagent, thereby promoting mixing of the first reagent and the second reagent. Therefore, even when a discharge amount of the second reagent is not so large or a viscosity of the first reagent is extremely high, the first reagent and the second reagent can be uniformly mixed.

### (Reagent Discharge Position of Reagent Dispensing Mechanism)

Next, a position relationship between the first reagent dispensing mechanism 100 and the second reagent dispensing mechanism 200 when the first reagent and the second reagent are discharged to the stopped common reaction container 2 will be described with reference to FIGS. 5 to 7. Here, the reagent discharge nozzle 14a of the second reagent dispensing mechanism 200 will be described as an example, but the same applies to the reagent discharge nozzle 15a, the reagent discharge nozzle 16a, and the reagent discharge nozzle 17a.

FIG. 5 is a side view showing the position relationship of the reagent dispensing mechanisms. As shown in FIG. 5, a discharge port of the reagent discharge nozzle 14a of the second reagent dispensing mechanism 200 is located higher than a discharge port of a reagent discharge nozzle 18 of the first reagent dispensing mechanism 100. Therefore, the first reagent discharged from the reagent discharge nozzle 18 of the first reagent dispensing mechanism 100 is hard to adhere to the reagent discharge nozzle 14a of the second reagent dispensing mechanism 200, and the reagent discharge nozzle 14a does not need to be washed as long as the reagent discharge nozzle 14a continues to discharge the same second reagent.

Further, it is desirable that a liquid surface in the reaction container 2 at a time when the discharge of the second reagent by the second reagent dispensing mechanism 200 ends is higher than the discharge port of the reagent discharge nozzle 18 of the first reagent dispensing mechanism 100. Accordingly, when the first reagent is a concentration reagent and the second reagent is a reagent that is shared with a plurality of concentration reagents, such as a diluent, it is expected that the second reagent will also have an effect of washing an outer wall of the reagent discharge nozzle 18 of the first reagent dispensing mechanism 100.

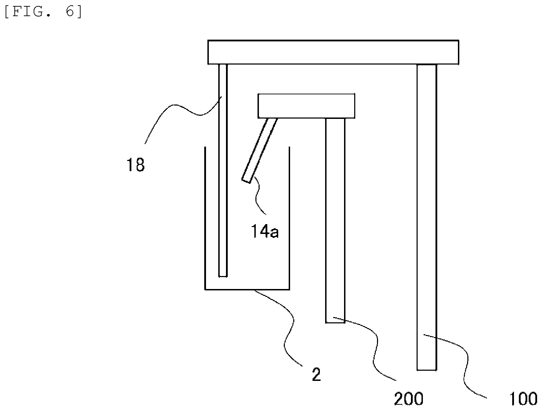

FIG. 6 is a side view showing another position relationship of the reagent dispensing mechanisms. In a case shown in FIG. 6 as well, a similar effect as in a case of FIG. 5 can be expected. Further, as shown in FIG. 6, the reagent discharge nozzle 14a of the second reagent dispensing mechanism 200 is inclined toward the reagent discharge nozzle 18 of the first reagent dispensing mechanism 100 with respect to a vertical direction, and the discharge port of the reagent discharge nozzle 14a is open toward the outer wall of the reagent discharge nozzle 18 of the first reagent dispensing mechanism 100. Therefore, a diluent discharged from the reagent discharge nozzle 14a of the second reagent dispensing mechanism 200 directly hits the outer wall of the reagent discharge nozzle 18 of the first reagent dispensing mechanism 100, and a washing effect is further enhanced. Since the second reagent is obliquely discharged with respect to the vertical direction, mixing can be promoted even when the first reagent and the second reagent are difficult to be mixed, such as when an amount of the second reagent discharged to the reaction container 2 is not large and a difference in amount with the first reagent is small, or when a viscosity of the first reagent is high. Since a trace amount of the first reagent adhering to and remaining on the discharge port and the outer wall of the reagent discharge nozzle 18 is also washed away by the second reagent, a degree of accuracy of the amount of the first reagent contained in the mixed liquid also increases.

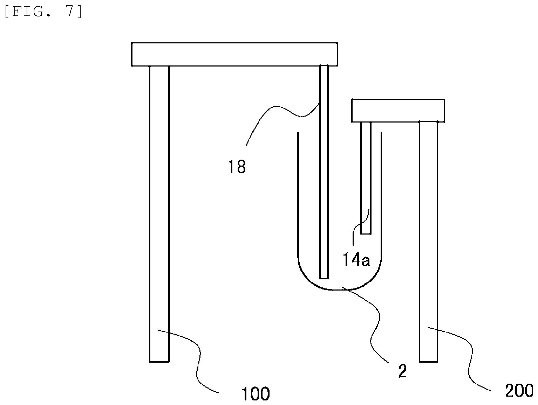

FIG. 7 is a side view showing still another position relationship of the reagent dispensing mechanisms. In a case shown in FIG. 7 as well, a similar effect as in a case of FIG. 5 can be expected. Further, in the case shown in FIG. 7, the discharge port of the reagent discharge nozzle 14a of the second reagent dispensing mechanism 200 is located closer to a side surface of the reaction container 2 than the discharge port of the reagent discharge nozzle 18 of the first reagent dispensing mechanism 100. Therefore, particularly when the reaction container 2 has a round bottom shape, the second reagent flows along a curved surface on an outer diameter side toward an inner diameter side, promoting mixing of the first reagent and the second reagent.

### (Temperature Adjustment of Reagent)

As described above, the second reagent dispensing mechanism 200 includes the temperature adjustment mechanism (not shown). Therefore, even when the first reagent dispensing mechanism 100 does not include a temperature adjustment mechanism, the second reagent to be mixed with the first reagent is adjusted to a predetermined temperature in advance by the temperature adjustment mechanism of the second reagent dispensing mechanism 200, so that the mixed liquid itself can be controlled to a temperature suitable for analysis (for example, 37°C). For example, when the first reagent is kept cool or at room temperature in the reaction disc 1, the second reagent may be adjusted in advance to a temperature higher than the temperature suitable for analysis (for example, 37°C to 40°C).

As described above, the amount of the first reagent discharged by the first reagent dispensing mechanism 100 to the reaction container 2 is smaller than the amount of the second reagent discharged by the second reagent dispensing mechanism 200 into the common reaction container 2, and it is assumed that, for example, the first reagent is a concentration reagent and the second reagent is a diluent. Therefore, even when a temperature of the first reagent is low before the first reagent is discharged, the temperature of the first reagent is likely to increase when mixed with the second reagent. The temperature adjustment mechanism may control so as to lower a temperature of the second reagent before discharging when a ratio of the amount of the second reagent to the amount of the first reagent is large, and to raise the temperature of the second reagent before discharging when the ratio of the amount of the second reagent to the amount of the first reagent is small.

### (Modification of Embodiment 1)

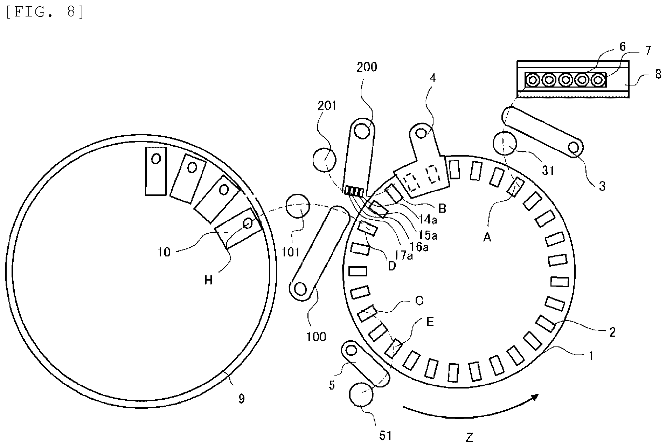

FIG. 8 is a plan view showing a schematic configuration of an automatic analysis device according to a modification of Embodiment 1. As shown in FIG. 8, in the present modification, the first reagent dispensing mechanism 100 can discharge a reagent only at the second reagent discharge position D, and the second reagent dispensing mechanism 200 can discharge a reagent only at the first reagent discharge position B. First, the first reagent dispensing mechanism 100 discharges the first reagent at the second reagent discharge position D, and then the second reagent dispensing mechanism 200 discharges the second reagent at the first reagent discharge position B.

In the present modification as well, the amount of the second reagent is larger than that of the first reagent, so that the first reagent and the second reagent are efficiently mixed by a liquid flow of a large amount of the second reagent that is discharged later. When a discharge amount of the second reagent is not so large or when a viscosity of the first reagent is extremely high, a mixed liquid in the reaction container 2 is further stirred by the stirring mechanism 5.

Even in a case of the present modification, it is possible to dispense a relatively large amount of the second reagent whose temperature is adjusted by the second reagent dispensing mechanism 200 of a dispensing type while guaranteeing use of various first reagents by the first reagent dispensing mechanism 100 of a pipetting type. Therefore, according to the present modification, it is also possible to shorten a time required for preparations before analysis such as adjusting a temperature of the reagent and dispensing an appropriate amount of reagent.

### Embodiment 2

### (Device Configuration)

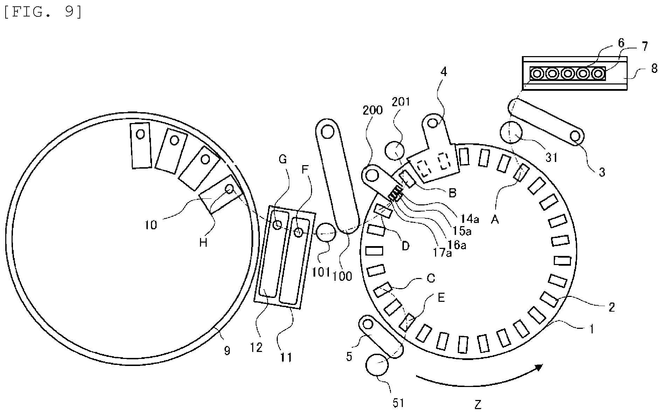

FIG. 9 is a plan view showing a schematic configuration of an automatic analysis device according to Embodiment 2. As shown in FIG. 9, unlike Embodiment 1, the automatic analysis device according to the present embodiment further includes a reagent loading position 11. That is, the first reagent dispensing mechanism 100 according to the Embodiment 2 can aspirate the first reagent not only from the reagent disc 9 but also from the reagent loading position 11. A plurality of reagent containers 12 or one reagent container 12 may be loaded in the reagent loading position 11. The first reagent contained in the reagent container 12 may be different from or the same as the first reagent contained in the reagent container 10 on the reagent disc 9. Further, the reagent container 12 placed on the reagent loading position 11 and the reagent container 10 placed on the reagent disc 9 do not need to have the same shape, and may have different shapes depending on an amount of use and a frequency of use.

In the present embodiment, the reagent container 10 (reagent container for disc), the reagent container 12 (reagent container for loading position), and another reagent container 12 (another reagent container for loading position) are disposed at different positions on a movement trajectory of the first reagent dispensing mechanism 100, specifically, at the reagent aspirating position H, a reagent aspirating position F, and a reagent aspirating position G. The first reagent dispensing mechanism 100 discharges the reagent aspirated from each reagent container into the common reaction container 2 at the first reagent discharge position B and/or the second reagent discharge position D. In the present embodiment as well, similarly to the Embodiment 1, not only the first reagent dispensing mechanism 100 but also the second reagent dispensing mechanism 200 may dispense the reagent into the stopped common reaction container 2.

### (Reagent Dispensing Operation)

Here, a reagent dispensing operation in the present embodiment will be described. First, by rotating and stopping the reaction disc 1, the reaction container 2, which is dispensed with a sample, moves to the second reagent discharge position D. Next, the first reagent dispensing mechanism 100 aspirates the first reagent from the reagent container 12 at the reagent aspirating position F and the reagent aspirating position G, and if necessary, the outer wall of the reagent discharge nozzle 18 is washed by the first reagent dispensing mechanism washing mechanism 101 at a predetermined washing position. Further, the first reagent dispensing mechanism 100 aspirates another first reagent from the reagent container 10 at the reagent aspirating position H. Thereafter, the first reagent dispensing mechanism 100 discharges each first reagent that is aspirated to the reaction container 2 at the second reagent discharge position D. Thus, in the present embodiment, before the first reagent dispensing mechanism 100 discharges the first reagent that is aspirated from the reagent container 12 into the reaction container 2, the first reagent dispensing mechanism 100 also aspirates the first reagent from the reagent container 10, and discharges the first reagents collectively into the reaction container 2, so that the first reagent can be efficiently dispensed into the reaction container 2. The first reagent dispensing mechanism 100 may first aspirate the first reagent at the reagent aspirating position H, and then aspirates the first reagent at the reagent aspirating position F or the reagent aspirating position G.

In the automatic analysis device according to the present embodiment, as the first reagent dispensed by the first reagent dispensing mechanism 100 of the pipetting type, for example, the first reagent that needs to be kept cool and the first reagent that is used frequently can be stored separately on the reagent disc 9 and the reagent loading position 11, respectively. That is, when the first reagent contained in the reagent container 12 has a high frequency of use and does not require cooling, the reagent container 12 has a size larger than that of the reagent container 10 and is stored in the reagent loading position 11 that does not have a cooling function. Thus, according to the present embodiment, the first reagent dispensing mechanism 100 of the pipetting type can further dispense various first reagents. In the present embodiment, it is assumed that the reagent disc 9 stores the first reagent in a refrigerated state and the reagent loading position 11 stores the first reagent at room temperature, but it is also possible to configure the reagent disc 9 so as not to have a cooling function, and for the reagent loading position 11 to have the cooling function.

### (Modification of Embodiment 2)

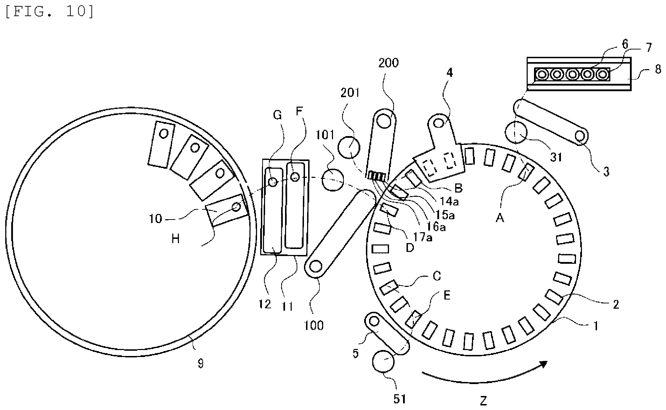

FIG. 10 is a plan view showing a schematic configuration of an automatic analysis device according to a modification of Embodiment 2. As shown in FIG. 10, in the present modification, the first reagent dispensing mechanism 100 can discharge a reagent only at the second reagent discharge position D, and the second reagent dispensing mechanism 200 can discharge a reagent only at the first reagent discharge position B. According to the automatic analysis device in the present modification, various first reagents stored in different reagent containers can be efficiently dispensed into the reaction container 2. As a result, a time required for preparations before analysis can be reduced.

### Embodiment 3

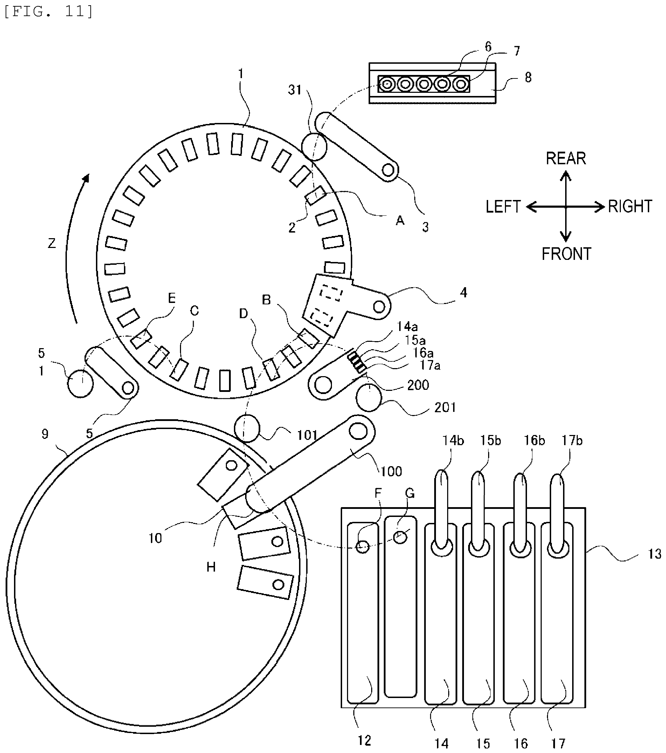

FIG. 11 is a plan view showing a schematic configuration of an automatic analysis device according to Embodiment 3. As shown in FIG. 11, in the automatic analysis device according to the present embodiment, the reagent container 12 containing the first reagent to be dispensed by the first reagent dispensing mechanism 100 and reagent containers 14 to 17 containing the second reagent to be dispensed by the second reagent dispensing mechanism 200 are provided side by side in the common reagent loading position 13. The reagent containers 14 to 17 are connected to the reagent discharge nozzles 14a to 17a of the second reagent dispensing mechanism 200 via reagent transport tubes 14b to 17b, respectively.

In the automatic analysis device according to the present embodiment, since the reagent containers of the reagent dispensing mechanisms are put together, a user can easily dispose or replace the reagent containers. In particular, since the reagent loading position 13, like the reagent disc 9, is located at a front of the automatic analysis device (at least the first reagent dispensing mechanism 100 and the second reagent dispensing mechanism), disposition and replacement of reagent containers can be performed in a space in front of the automatic analysis device, further improving workability.

The above-described Embodiment 1 to Embodiment 3 have been described in detail to facilitate understanding of the invention, and the invention is not necessarily limited to those including all the configurations described above. Further, a part of a configuration of a certain embodiment can also be replaced with a configuration of another embodiment, and a configuration of another embodiment can also be added to a configuration of a certain embodiment. A part of a configuration in each embodiment may also be added to, deleted from, or replaced with another configuration.

### Reference Signs List

1: reaction disc
2: reaction container
3: sample dispensing mechanism
4: reaction container washing mechanism
5: stirring mechanism
6: sample container
7: rack
8: sample conveyance mechanism
9: reagent disc
10: reagent container
11: reagent loading position
12: reagent container
13: reagent loading position
14 to 17: reagent container
14a to 17a: reagent discharge nozzle
14b to 17b: reagent transport tube
18: reagent discharge nozzle
31: sample dispensing mechanism washing mechanism
51: stirring mechanism washing mechanism
100: first reagent dispensing mechanism
101: first reagent dispensing mechanism washing mechanism
200: second reagent dispensing mechanism
201: second reagent dispensing mechanism washing mechanism

## Claims

1. An automatic analysis device comprising:
a first reagent dispensing mechanism of a pipetting type that, upon aspirating a reagent, moves to a prescribed location away from the reagent and then discharges the reagent; and
a second reagent dispensing mechanism of a dispensing type that supplies a reagent via a flow path connecting an aspirating port to a discharge port for the reagent, wherein
the second reagent dispensing mechanism includes a temperature adjustment mechanism that adjusts a temperature of the reagent.

2. The automatic analysis device according to claim 1, wherein
an amount of second reagent discharged by the second reagent dispensing mechanism into a common reaction container is larger than an amount of first reagent discharged by the first reagent dispensing mechanism into the reaction container.

3. The automatic analysis device according to claim 2, wherein
the first reagent dispensing mechanism discharges the first reagent, and the second reagent dispensing mechanism discharges the second reagent to the stopped common reaction container.

4. The automatic analysis device according to claim 3, wherein
the second reagent dispensing mechanism starts discharging the second reagent after the first reagent dispensing mechanism starts discharging the first reagent.

5. The automatic analysis device according to claim 4, wherein
the second reagent dispensing mechanism starts discharging the second reagent before the first reagent dispensing mechanism finishes discharging the first reagent.

6. The automatic analysis device according to claim 4, wherein
the second reagent dispensing mechanism finishes discharging the second reagent after the first reagent dispensing mechanism finishes discharging the first reagent.

7. The automatic analysis device according to claim 3, wherein
the first reagent dispensing mechanism starts and finishes discharging the first reagent while the second reagent dispensing mechanism is discharging the second reagent.

8. The automatic analysis device according to claim 3, wherein
the discharge port of the second reagent dispensing mechanism is located higher than a discharge port of the first reagent dispensing mechanism.

9. The automatic analysis device according to claim 8, wherein
the first reagent is a concentration reagent, and the second reagent is a diluent, and
the diluent discharged from the second reagent dispensing mechanism hits an outer wall of a nozzle of the first reagent dispensing mechanism.

10. The automatic analysis device according to claim 9, wherein
the discharge port of the second reagent dispensing mechanism is open toward the outer wall of the nozzle of the first reagent dispensing mechanism.

11. The automatic analysis device according to claim 3, wherein
the discharge port of the second reagent dispensing mechanism is located closer to a side surface of the reaction container than a discharge port of the first reagent dispensing mechanism.

12. The automatic analysis device according to claim 1, wherein
reagent containers are disposed at different positions on a movement trajectory of the first reagent dispensing mechanism, and
the first reagent dispensing mechanism discharges a reagent aspirated from each reagent container into a common reaction container.

13. The automatic analysis device according to claim 12, wherein
before discharging a reagent aspirated from a predetermined reagent container, the first reagent dispensing mechanism also aspirates a reagent from another reagent container, and collectively discharges the reagents into the reaction container.

14. The automatic analysis device according to claim 1, wherein
a reagent container that contains a first reagent to be dispensed by the first reagent dispensing mechanism and a reagent container that contains a second reagent to be dispensed by the second reagent dispensing mechanism are provided side by side in a common reagent loading position.

15. The automatic analysis device according to claim 14, wherein
the reagent loading position is located in front of the first reagent dispensing mechanism and the second reagent dispensing mechanism.
